# EUROPEAN PATENT APPLICATION

(11) **EP 1 712 441 A1**
(43) Date of publication of application: **18.10.2006**
(21) Application number: 06112374.1
(22) Date of filing: 07.04.2006
(51) Int. Cl.: B60T 8/17

(54) **Aircraft taxi speed control system**

(30) Priority: 02.06.2005 US 143183; 11.04.2005 US 670048 P
(71) Applicant: Goodrich Corporation, Charlotte, North Carolina 28217-4578 (US)
(72) Inventor: Riebe, Gary, Tipp City, Ohio 45371 (US); Corio, Lawrence, Troy, Ohio 45371 (US)
(74) Representative: Hilleringmann, Jochen

(57) **Abstract**

An aircraft brake control system for controlling operation of a plurality of carbon brakes is provided. Each brake (34) includes at least one brake actuator (1-4) that is responsive to an electrical drive control signal (52) for applying squeeze force to a brake disk stack for effecting a braking torque on a wheel (36) of a vehicle. The control system includes a controller (40,44) for providing electrical drive control signals (52) to one or more of the brake actuators in response to an input brake command signal (48,72) from a pilot to effect application of squeeze force to the brake disk stack to effect a braking operation. The brake controller (40,44) is configured for taxi mode operation during aircraft taxiing to provide electrical drive control signals to one or more of the brake actuators that cause some or all of the brake actuators to provide continued light braking during taxiing even when the controller is not commanded by the input brake command signal (48,72) from the pilot to effect a braking operation.

## Description

### Cross-Reference to Related Application

This application claims priority under 35 USC §119 to U.S. Provisional Application No. 60/670,048 entitled "Aircraft Taxi Speed Control System and Method" and filed April 11, 2005, the entire disclosure of which is incorporated herein by reference.

### Technical Field of the Invention

The invention herein described relates to aircraft braking systems, and more particularly to braking systems for aircraft brakes that use heat sinks composed of carbon disks.

### Backciround of the Invention

Aircraft wheel and brake assemblies heretofore have included a non-rotatable wheel support, a wheel rotatably mounted to the wheel support, and a brake disk stack (heat sink) having alternating rotor and stator disks mounted with respect to the wheel support and wheel for relative axial movement. Each rotor disk is coupled to the wheel for rotation therewith and each stator disk is coupled to the wheel support against rotation. A back plate is located at the rear end of the disk stack and a brake head is located at the front end. The brake head may house or have mounted thereto a plurality of actuator rams (or other pressure applying member or members) that extend to compress (squeeze) the brake disk stack against the back plate. Torque is taken out by the stator disks through a static torque tube or other torque take-out device.

The disks may be made of carbon, typically a carbon-carbon composite material comprising a carbon fiber reinforcing material within a carbon matrix. Accordingly, brake assemblies using such disks are referred to as carbon brakes. Carbon brakes are desirable because of their light weight and performance characteristics.

As noted in U.S. Patent No. 6,604,708, carbon brake life is significantly extended by decreasing the number of brake applications during each landing cycle. More particularly, carbon brake wear has been found to correlate significantly with the number of brake applications and to not be significantly affected by the energy absorbed during each. By far the largest number of brake applications occur during ordinary taxiing, such brake applications typically involving taxi snubs or stops. Since modern aircraft designed to carry large passenger or cargo payloads are often provided with carbon brakes on each wheel that is mounted on landing gear under the body or wing, it has been proposed to apply only some of the aircraft brakes in response to brake applications under ordinary taxiing conditions. An alternating wheel braking pattern may be established to minimize brake wear at each braked wheel and yet to promote even distribution of absorbed energy among all the brakes. This, in turn, prevents overheating of any individual brake. This technique is commonly referred to as "selective braking" during taxing. While beneficial, the carbon brakes are still subjected to taxi snubs that can cause passenger discomfort and wear of the "selected" brakes.

### Summary of the Invention

The present invention provides an aircraft taxi speed control system and method which limits taxi snubs for improved passenger comfort and longer brake wear life. In accordance with the invention, some or all of the brakes are controlled to provide continued light braking during taxiing, thereby reducing or eliminating repeated taxi snubs. The system may be configured to close a control loop around real time torque, force, position or temperature of the individual brakes measured directly or derived from an aircraft brake health monitoring system, with the result being significant improvement in brake life.

The foregoing and other features of the invention are hereinafter fully described and particularly pointed out in the claims, the following description and the annexed drawings setting forth in detail one or more illustrative embodiments of the invention, such being indicative, however, of but one or a few of the various ways in which the principles of the invention may be employed.

### Brief Description of the Drawings

In the annexed drawings:
- FIG. 1: is an environmental view of an electromechanical braking system in an aircraft;
- FIG. 2: is a general block diagram of the electromechanical braking system ;
- FIG. 3: is a detailed block diagram of the electromechanical braking system; and
- FIG. 4: is a system flowchart providing an example of the taxi speed control process.

### Detailed Description

Carbon brake wear rates are a function of many inputs, two of which are the number of brake applications per cycle and the temperature of the brake during the braking event. A relationship exists whereby a higher wear rate is exhibited as a result of a greater idle thrust to weight ratio of some aircraft compared to others, causing some aircraft to accelerate while taxing. The temperature impact is driven from a fundamental understanding of carbon.

The present invention describes a brake control system and method which can reduce the number of taxi stops by applying a continued light braking, or light drag, on the brake heat stack to control the taxi speed of the aircraft. Preferably the system and method is designed to control the speed so that the aircraft does not accelerate while in the taxi mode.

The basis for this approach is that minimizing the number of times the brake releases will better maintain the wear debris layer, which is where much of the actual work of stopping the aircraft is believed to be performed. Historical data demonstrates that wear rates tend to reduce under a constant drag environment. The ability to control a light drag force has technical issues due to the fidelity of the force transducers. One way to manage this is to reduce the number of actuators that are active to create the light brake dragging force. This can be done by activating less than all of the actuators on each brake, for example, activating one, two or three of the four actuators on each brake, and or activating one, two, or three of the four brakes on each gear strut. This effectively increases the loading on each actuator and each brake providing better control of the continued light braking or light brake drag feature.

A variety of feedback parameters can be queried to establish a given aircraft operating mode has to be present before taxi speed control is initialized, for example. Data items may be, for example, a) speed of the aircraft; b) temperature of the brakes; c) weight on struts; etc. This helps ensure that uncommanded braking does not occur, particularly at touch down and during accelerated rolls to take off.

Managing the temperature of the brake helps to ensure that the heat stack is within prescribed operating temperatures prior to take off, thereby ensuring that the maximum RTO energy stopping capability is still present. Reducing the number of brakes active during the taxi operation may concentrate the energy dissipation into less heat sink mass which would raise the temperature. Brake temperature can be monitored through means of sensing and recording the temperature.

In a preferred embodiment, the use of taxi speed control can be beneficial on the taxi out and taxi in periods. In large or heavy traffic airport environments the aircraft continually has to wait in line to move to the next position as it approaches the take off end of the runway. The taxi speed control procedure impacts the taxi portion of the cycle, as shown within the following scenario reducing the number of brake applications from 21 to 9 stops.
Case 1- Ten cold taxi snubs and stops from 30 knots to 0 and 30 knots to 10 knots, service stop, ten hot taxi snubs and stops. (21 Stop cycle without taxi speed control)
Case 2- 2 Taxi snubs, 1050 lb ft drag for 2000 ft, taxi stop, 1050 lb ft drag for 2000 ft, taxi stop. Do in both a cold and hot condition. (9 Stop cycle with 4000 ft drag with taxi speed control)
   - 1: Taxi Snub
   - 2: Taxi Snub
   - 3: 2000 ft drag at 10 knot at 1050 ft lbs of torque (Normalized-8. ft lbs / sec / sq in)
   - 4: Taxi Stop
   - 5: Service Stop
   - 6: Taxi Snub
   - 7: Taxi Snub
   - 8: 2000 ft drag at 10 knots at 1050 ft lbs of torque
   - 9: Taxi Stop

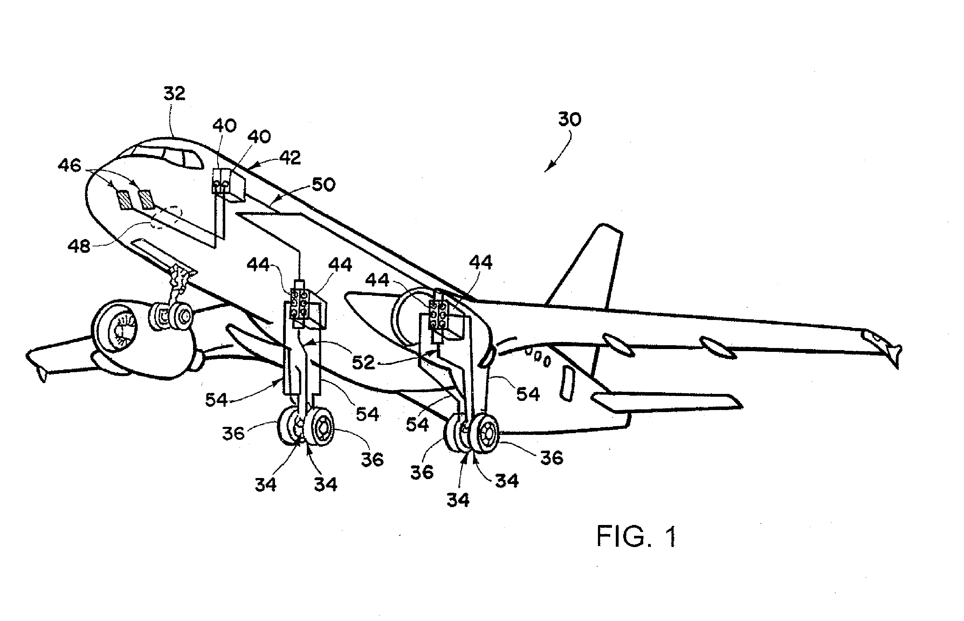

Referring initially to FIG. 1, an exemplary electromechanical braking system 30 in is shown in relation to a jet aircraft 32 (illustrated in phantom). The system 30 is designed as a brake-by-wire system compatible with the performance, safety, electrical and mechanical interfaces, redundancy, and other requirements of an aircraft such as a commercial transport. In the illustrated system, four electromechanical brakes 34 are provided.

The aircraft 32 in the present embodiment includes a pair of wheels 36 mounted to a landing gear 55 under the left wing of the aircraft and a pair of wheels 36 mounted to a landing gear 57 under the right wing of the aircraft, Each wheel 36 includes a respective brake 34 for providing braking action thereto.

The system 30 further includes two redundant digital brake system control units (BSCUs) 40. The BSCUs 40 carry out the brake control and typically antiskid processing functions. The BSCUs 40 may be located in the electronics bay 42 of the aircraft 32.

The system 30 also includes four redundant electromechanical actuator controllers (EMACs) 44 which convert brake clamp force or actuation commands from the BSCUs 40 to servo motor control signals which ultimately provide actuator braking forces.

A pilot of the aircraft 32 may provide brake commands to the braking system 30 via a pair of left and right brake pedal transducers 46 included in the cockpit. The transducers 46 may provide brake command signals to the BSCUs 40 which typically are proportional to the desired amount of braking. The output of each transducer 46 may be coupled to the BSCUs 40 via a cable 48. Communications between the BSCUs 40 and the EMACs 44 may occur over a communication bus 50 connected therebetween.

Each of the EMACs 44 may be designed to provide electrical power to the electromechanical actuators within the corresponding brakes 34 via a respective power cable 52. In addition, each brake 34 may have an associated torque sensor, load sensor, temperature, position and/or and wheel speed sensor. The outputs of the sensors may be provided to the respective EMACs 44 via cables 54. The EMACs 44 may condition the signals and provide them to the BSCUs 40 as feedback signals to carry out the brake control and antiskid processing functions.

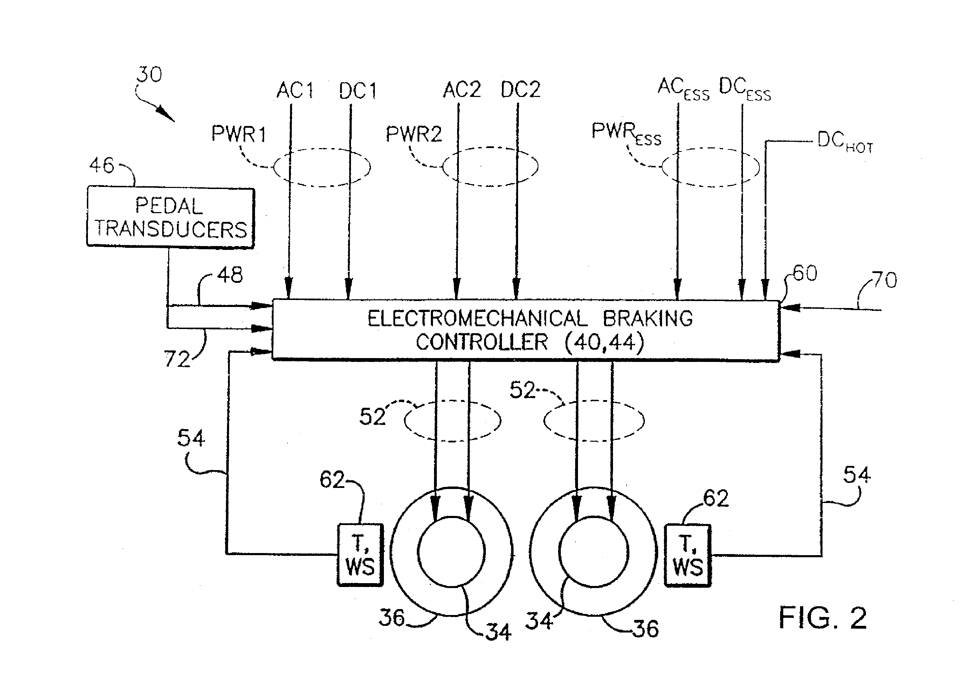

FIG. 2 is a simplified block diagram of the braking system 30 as employed within the aircraft 32. The BSCUs 40 and the EMACs 44 are shown collectively as an electromechanical braking controller 60. The controller 60 may receive as its primary inputs the brake command signals from the transducers 46, and the outputs of torque and wheel speed sensors 62 included as part of the brake 34 on each wheel 36. In another embodiment, a load sensor, temperature sensor and/or position sensor may be used in addition and/or in place of the torque sensor, as will be appreciated.

The braking system 30 may receive power from three primary power busses and a secondary power bus included within the aircraft 32. As is known, an aircraft 32 oftentimes will include multiple power busses. In the exemplary embodiment, the aircraft 32 includes primary power busses PWR1, PWR2 and PWRess. Each power buss may be independent of one or more of the other power busses to provide a level of redundancy. For example, the power buss PWR1 may consist of an alternating-current (AC) power source AC1 and a commonly generated direct-current (DC) power source DC1. Similarly, the power buss PWR2 may consist of an AC power source AC2 and a commonly generated DC power source DC2; and the power buss PWRess may consist of an AC power source ACess and commonly generated DC power source DCess.

The aircraft 32 may further include an emergency DC power buss represented by a DChot power source. The DChot power source may be a battery supply on board the aircraft 32. The battery may be charged via power from one of the other power sources, or may be charged separately on the ground.

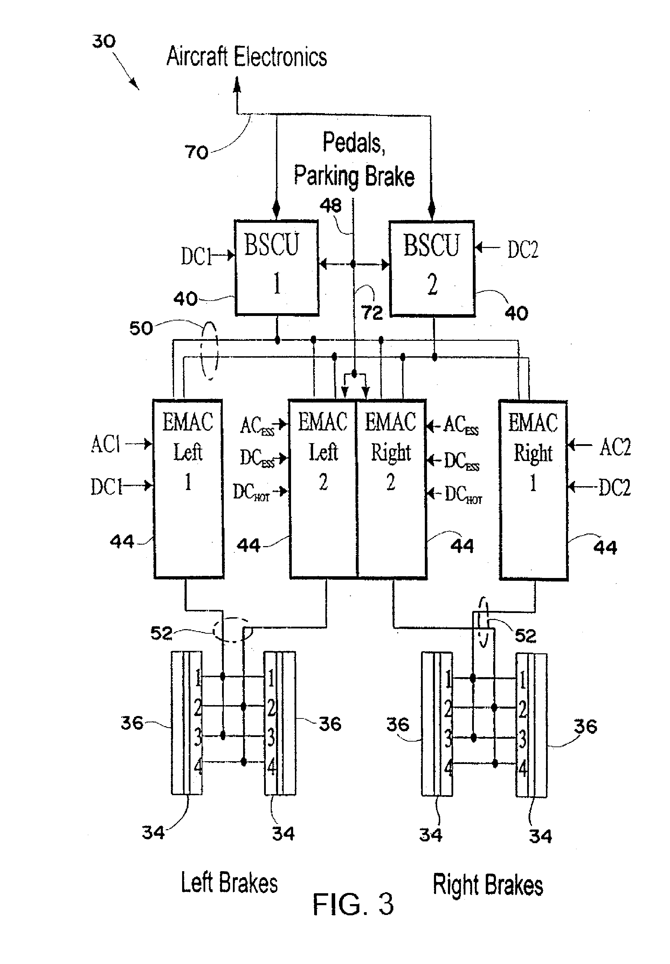

Turning now to FIG. 3, the exemplary braking system 30 is illustrated in more detail. As noted above, the system 30 includes two BSCUs 40 designated BSCU1 and BSCU2, respectively. BSCU1 and BSCU2 are redundant and are both configured to provide an input/output interface to the aircraft 32 electronics within the cockpit, for example, via a bus 70. In addition, BSCU1 and BSCU2 each contain circuitry for performing top level brake control and usually antiskid algorithm processing functions. BSCU1 and BSCU2 each receive proportional brake command signals from the transducers 46 via cable 48.

BSCU1 and BSCU2 are each designed to receive the proportional brake command signals from the transducers 46 and process the signals based on the aforementioned brake control and antiskid algorithms to produce a brake command signal which is provided to the EMACs 44. The particular brake control and antiskid algorithms employed by the BSCUs 40 can be conventional, but modified in accordance with the invention as described below.

BSCU1 and BSCU2 each may provide brake commands and otherwise communicate with the EMACs 44 via the aforementioned communication bus 50. As noted above, the system 30 may include four redundant EMACs 44 respectively labeled EMAC Left1, EMAC Left2, EMAC Right1 and EMAC Right2. As shown in FIG. 3, each EMAC 44 may be coupled to the communication bus 50 so as to be able to receive brake commands from each of the BSCUs 40 and otherwise communicate with the other devices coupled to the bus 50. The EMACs 44 may receive the left and right brake commands from the BSCUs 40 and provide control signals to actuator modules within the brakes 34 as discussed below to drive the actuator modules to their commanded position or clamp force. In this manner, controlled braking may be effected.

Each brake 34 included in the system 30 includes a force application device which, as illustrated, may include four separate actuator modules (designated by numerals 1-4). Each actuator module 1-4 may include an electric motor and actuator (not shown) which is driven in response to electrical control signals provided by a respective EMAC 44 to exert mechanical braking torque on a respective wheel 36. Each EMAC 44 may controls half of the actuator modules 1-4 for the wheels 36 on either the left wing landing gear or the right wing landing gear. Thus, EMAC Left1 may provide control to actuator modules 1 and 3 of each of the wheels 36 in the left side landing gear (representing the left brakes) via cable 52. Similarly, EMAC Left2 may have its output coupled to the remaining actuator modules 2 and 4 of the wheels 36 in the left side landing gear via cable 52. EMAC Right1 similarly may provide power to the actuator modules 1 and 3 for the wheels 36 in the right side landing gear (representing the right brakes), and EMAC Right2 may provide power to the remaining actuator modules 2 and 4 in the right side landing gear via another cable 52.

Thus, when the system 30 is fully operational (i.e., during normal operation) each of the EMACs 44 may receive brake commands from BSCU1 and BSCU2 which will be generally redundant. Nevertheless, the EMACs 44 may be configured to give commands provided by BSCU1 priority or vice versa. In the event commands are not received from one of the BSCUs 40, the EMACs 44 are configured to default to the other BSCU 40. During normal operation, all four actuator modules 1-4 may receive brake control signals from their respective EMAC 44 to provide full braking.

Although not shown in FIG. 3, the outputs of the wheel speed and torque sensors 62 (if used) for each brake 34 may be coupled to the respective EMACs 44 via the cables 54 (FIG. 2). The EMACs 44 may be configured to condition the signals and provide the measured wheel speed and torque to the BSCUs 40 via the communication bus 50. The BSCUs 40 in turn may use such information in a conventional manner for carrying out brake control and antiskid processing.

For further details of the above-described exemplary brake control system, reference can be had to U.S. Patent No. 6,402,259, which is hereby incorporated herein by reference.

The above-described and other brake control systems can be adapted in accordance with the invention to reduce or eliminate brake taxi snubs in the below described manner. In particular, the BCSUs and/or EMACs can be configured for operation during aircraft taxiing to provide electrical drive control signals to one or more of the brake actuators that cause some or all of the brake actuators to provide continued light braking during taxiing even when the controller is not commanded by the input brake command signal from the pilot to effect a braking operation. More particularly, one or more of the brake actuators may be commanded at all times during taxiing to apply at least a light squeeze force to the respective brake disk stack even when a braking operation is not being commanded by the pilot, thereby to reduce or eliminate repeated taxi snubs. Moreover, the system can be configured for closed loop control using real time temperature feedback of the individual brake disk stacks derived from temperature sensors. The temperature sensors (not shown) can be mounted with respect to the brake disk stacks in a conventional or other suitable manner to provide real time heat sink temperature data to the controller. These techniques in accordance with the invention can be applied to braking systems that utilize selective braking during taxiing, whereby the "selected" brakes are commanded to provide light braking during taxiing even when a braking operation is not being commanded by the pilot.

In another embodiment, other types of sensors may be used to provide real time feedback to the BCSUs and/or EMACs to provide the desired continued light braking in accordance with the invention. For example, torque sensors may be utilized to provide real time torque feedback in the form of brake and/or landing gear torque sensors. Force feedback may be utilized from individual actuator or brake force sensors. In addition, or in the alternative, position feedback from actuator position sensors may be utilized to provide closed loop position control.

The reference herein to "continued light braking" means the actuator or actuators are commanded to apply a light squeeze force sufficient to maintain the disks of the brake disk stack engaged ("actuated") but with a minimal amount of braking being effected so as to minimize the amount of thrust needed to overcome the light braking for aircraft taxiing. This may be understood as the amount of squeeze force to resist the idle thrust of the engine(s) to keep the aircraft from rolling and/or actually accelerating without some type of pilot command. The brake control can be configured to determine whether or not the aircraft is taxiing in response the wheel speed and/or flight stage data. In addition, or in the alternative, "continued light braking" may refer to the actuator or actuators being commanded to apply a light squeeze force sufficient to maintain the disks of the brake disk stack engaged ("actuated") but with a minimal amount of braking being effected so as to increase or maintain the temperature of the carbon disks to a predetermined level for reducing brake wear and/or increasing braking effectiveness.

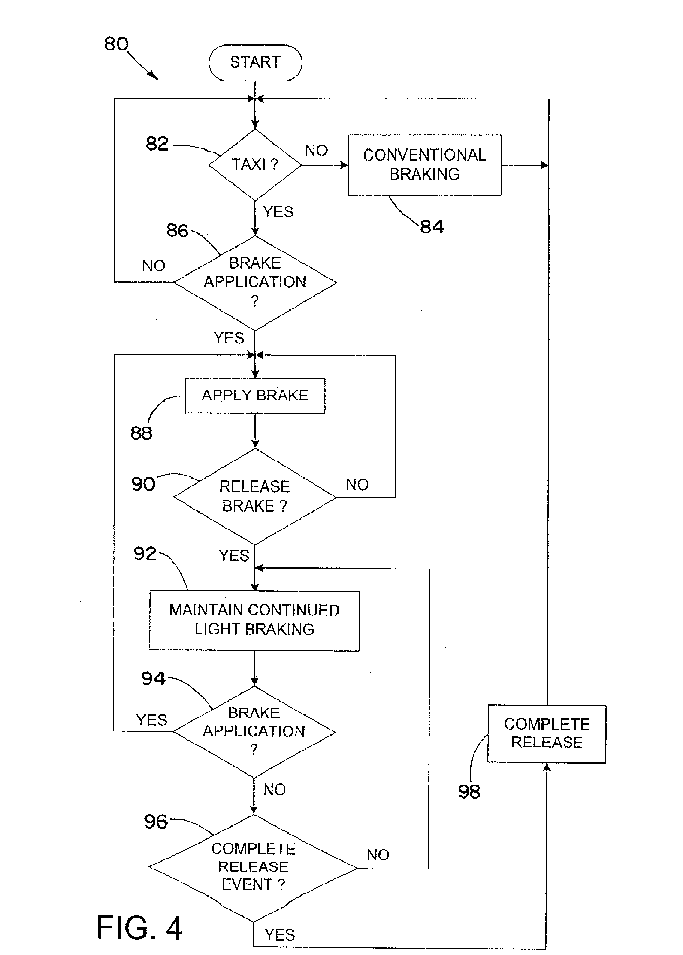

Referring now to FIG. 4, a system flowchart 80 exemplifying the operation of the taxi speed control system and method of the present invention is illustrated. Those having ordinary skill in the art of brake control will appreciate the manner in which the brake controller(s) (e.g., BSCU1 and BSCU2) and/or EMAC(s) 44 (see, e.g., FIG. 3) may be programmed using any of various conventional programming techniques to carry out the process illustrated in FIG. 4 without undue effort. Accordingly, details as to the particular programming has been omitted for sake of brevity.

Beginning in step 82, the system 30 determines whether the aircraft 32 is in the taxiing mode. Such determination may be based, for example, on the measured wheel speed as provided to the BSCUs 40. Alternatively, such determination may be based on flight stage data, or a discrete pilot command, etc. If the BSCUs 40 determine the aircraft 32 is not in a taxi mode, e.g., by virtue of the measured wheel speed being equal to zero or greater than some predetermined speed indicative of takeoff or taxiing following landing, the BSCUs 40 control the brakes 34 so as to carry out conventional braking as represented by step 84.

If, on the other hand, the BSCUs 40 determine that the aircraft 32 is in the taxi mode in step 82, e.g., by virtue of the measured wheel speed being greater than zero but less than the predetermined speed indicative of takeoff, the system 30 proceeds to step 86. In step 86, the BSCUs 40 determine if the pilot has requested application of the brakes 34 by virtue of the brake command signals received from the pedal transducers 46 (FIG. 1). If no in step 86, the BSCUs 40 will return to step 82 as shown and continue to loop thru steps 82 and 86 during taxiing.

Upon the BSCUs 40 detecting a pilot request for application of the brakes 34 in step 86, the system 30 proceeds to step 88. The BSCUs 40 in step 88 provide brake control signals to the EMACs 44 so as to provide an amount of braking force to the wheels 36 in proportion to brake command signals received from the pedal transducers 46. Such braking in step 88 provides the desired pilot commanded braking to slow down and/or stop the aircraft 32 during taxiing.

Following step 88, the system 30 proceeds to step 90 in which the system 30 determines if the pilot has requested release of the brakes. For example, the BSCUs 40 determine if the brake command signals received from the pedal transducers 46 have returned to "zero" or some other nominal value indicating no braking is desired. If no in step 90, the system 30 returns to step 88 and continues to loop through steps 88 and 90 providing the pilot commanded braking.

Upon determining that the pilot has requested release of the brakes during taxiing as represented in step 90, the system 30 proceeds to step 92 in which the BSCUs 40 are programmed to maintain continued light braking as discussed above. Namely, rather than completely releasing the brake actuators as is conventional, the BSCUs 40 provide brake clamp force commands to the EMACs 44 to apply a light squeeze force sufficient to maintain the disks of the brake disk stack engaged ("actuated") but with a minimal amount of braking being effected so as to minimize the amount of thrust needed to overcome the light braking for aircraft taxiing. Alternatively, the BSCUs 40 command the EMACs 44 to cause a light squeeze force to be applied in order to maintain a taxi speed of the aircraft yet prevent acceleration due to idle thrust of the aircraft engine(s), for example. Under such type of taxi speed control, the output from the wheel speed sensors may serve as a control feedback signal. In addition, or in the alternative, the BSCUs 40 cause the actuator or actuators to apply a light squeeze force sufficient to maintain the disks of the brake disk stack engaged ("actuated") but with a minimal amount of braking being effected so as to increase or maintain the temperature of the carbon disks to a predetermined level for reducing brake wear and/or increasing braking effectiveness.

By maintaining continued light braking in step 92, the system 30 avoids wear of the carbon disks associated with repeated full on/off actuation of the brakes during taxi operations. By controlling and maintaining the amount of continued light braking during taxiing, subsequent brake commands from the pilot via the transducers 46 result simply in the modulation of the braking force being applied by the actuators. The actuators are not fully released and then re-engaged with subsequent brake commands. Thus, the problems associated with brake wear due to full on/off actuation are avoided.

The amount of brake force maintained during light braking in step 92 can be predetermined based on the known characteristics of the carbon disks, etc. The outputs from the torque sensors 62 (FIG.2) (or, alternatively, load sensors) can provide closed loop control to the BSCUs 40 which allow the BSCUs 40 to control and maintain the desired amount of light braking. In addition, or in the alternative, other types of sensors (e.g., force, speed, position etc.) may be used to provide the desired type of feedback. In one embodiment, temperature sensors (not shown) may be included for measuring the temperature of the brakes (e.g., carbon disks). The outputs of the temperature sensors are provided to the BSCUs 40 which are programmed to maintain a desired amount of light braking which keeps the brakes at a desired elevated temperature for maintaining braking effectiveness, increasing brake life, etc.

While maintaining the continued light braking of step 92, the system 30 proceeds to step 94 where the BSCUs 40 determine whether the pilot has again requested application of the brakes by virtue of the brake command signals received from the pedal transducers 46. If yes in step 94, the system 30 returns to step 88 in which the BSCUs 40 again provide brake control signals to the EMACs 44 so as to provide an amount of braking force to the wheels 36 in proportion to the brake command signals received from the pedal transducers 46. Thus, the system 30 again proceeds through steps 88-94. As a result, the pilot may request braking multiple times during taxiing. However, in between requested braking events the system 30 maintains continued light braking so as to avoid repeated full on/off actuation.

If in step 94 the system 30 does not detect a pilot request for brake actuation, the system 30 proceeds to step 96 in which it determines if a complete release event has occurred. If a complete release event has not occurred, the system 30 returns to step 92 in which the light braking is continued. Else, if a complete release event has occurred as determined in step 96, the system 30 proceeds to step 98 in which the BSCUs 40 cause the actuators 34 to completely release as is done in conventional braking when the pilot releases the pedal transducers 46. Following the complete release in step 98, the system 30 returns to step 82 as shown in FIG. 4. The above-described process is then repeated.

A "complete release event", as referred to herein with respect to step 96, is any predesignated event which is intended to cause the BSCUs 40 to release completely the brake actuators so as to no longer maintain continued light braking. The particular types of "complete release events" are not germane to the invention in its broadest sense. However, those having ordinary skill in the art will appreciate that such "complete release events" may include, but are not limited to, the following:
(1) The measured wheel speed from the sensors 62 becoming greater than a predetermined speed indicative of a takeoff condition;
(2) The measured wheel speed becoming equal to zero;
(3) The measured wheel speed becoming and remaining equal to zero for a predetermined period of time;
(4) Manual activation via a pilot-controlled switch; and
(5) Absence of a pilot-requested brake application for a predetermined period of time.

Although the invention has been shown and described with respect to certain preferred embodiments, it is obvious that equivalents and modifications will occur to others skilled in the art upon the reading and understanding of the specification. For example, although the present invention has clear utility in connection with an aircraft, the braking system described herein can also be used on other type vehicles without departing from the scope of the invention. In addition, the invention can be applied to braking systems other than those using an electromagnetic actuators or actuators, such as to systems using a hydraulic actuator or actuators, or combinations thereof. The present invention includes all such equivalents and modifications.

## Claims

1. An aircraft brake control system for controlling operation of a plurality of carbon brakes each including at least one brake actuator that is responsive to an electrical drive control signal for applying squeeze force to a brake disk stack for effecting a braking torque on a wheel of a vehicle, the control system comprising a controller for providing electrical drive control signals to one or more of the brake actuators in response to an input brake command signal from a pilot to effect application of squeeze force to the brake disk stack to effect a braking operation, the brake controller being configured for taxi mode operation during aircraft taxiing to provide electrical drive control signals to one or more of the brake actuators that cause some or all of the brake actuators to provide continued light braking during taxiing even when the controller is not commanded by the input brake command signal from the pilot to effect a braking operation.

2. The aircraft brake control system as set forth in claim 1, wherein one or more of the brake actuators is commanded at all times during taxiing to apply a light squeeze force to the respective brake disk stack, thereby to reduce or eliminate repeated taxi snubs.

3. The aircraft brake control system as set forth in claim 1 or 2, wherein the system is configured to provide closed loop control using real time temperature feedback of the individual brake disk stacks derived from temperature sensors.

4. The aircraft brake control system as set forth in any one of claims 1 to 3, wherein the brake controller causes the some or all of the brake actuators to stop providing the continued light braking upon an occurrence of a predefined complete release event.

5. The aircraft brake control system as set forth in claim 4, wherein the predefined complete release event comprises a measured wheel speed.

6. The aircraft brake control system as set forth in claim 5, wherein the measured wheel speed is greater than a predetermined wheel speed.

7. The aircraft brake control system as set forth in claim 5, wherein the measured wheel speed is substantially zero.

8. The aircraft brake control system as set forth in any one of claims 1 to 7, wherein the brake controller is configured to control the continued light braking so as to minimize acceleration of the aircraft due to idle engine thrust.

9. The aircraft brake control system as set forth in any one of claims 1 to 8, wherein the brake controller is configured to cause all of the at least one actuators in each of the plurality of brakes to provide the continued light braking.

10. The aircraft brake control system as set forth in any one of claims 1 to 9, wherein the brake controller is configured to cause only a subset of the at least one actuators in each of the plurality of brakes to provide the continued light braking.

11. The aircraft brake control system as set forth in any one of claims 1 to 10, wherein the brake controller is configured to cause all of the at least one actuators in only a subset of the plurality of brakes to provide the continued light braking.

12. The Aircraft brake control system as set forth in any one of claims 1 to 11, wherein the system is configured to provide closed loop control using real time torque feedback from a torque sensor.

13. The aircraft brake control system as set forth in any one of claims 1 to 12, wherein the system is configured to provide closed loop control using real time force feedback from a force sensor.

14. The aircraft brake control system as set forth in any one of claims 1 to 13, wherein the system is configured to provide closed loop control using position feedback from an actuator position sensor.
